Europäisches Patentamt

European Patent Office

Office européen des brevets

(11) Publication number: **0 444 819 A2**

# EUROPEAN PATENT APPLICATION

(21) Application number: 91301350.4

(22) Date of filing: 20.02.91

(51) Int. Cl.5: **D06M 15/07**, B05C 3/132, B05D 1/38

(30) Priority: 28.02.90 JP 49876/90

(43) Date of publication of application:
04.09.91 Bulletin 91/36

(84) Designated Contracting States:
**CH DE GB IT LI**

(71) Applicant: **TAKUMA CO., LTD.**
**3-23, Dojima Hama 1-chome**
**Kita-ku Osaka(JP)**

(72) Inventor: **Hayashi, Shigetoshi**
c/o Takuma Co.,Ltd., 3-23 Dojima Hama
1-chome .
**Kita-ku, Osaka(JP)**
Inventor: **Mino, Takeyasu**
c/o Takuma Co.,Ltd., 3-23 Dojima Hama
1-chome
**Kita-ku, Osaka(JP)**
Inventor: **Yagi, Yasuhiro**
c/o Takuma Co.,Ltd., 3-23 Dojima Hama
1-chome
**Kita-ku, Osaka(JP)**
Inventor: **Harada, Mitsuaki**
c/o Takuma Co.,Ltd., 3-23 Dojima Hama
1-chome
**Kita-ku, Osaka(JP)**

(74) Representative: **Daley, Michael John et al**
**F.J. CLEVELAND & COMPANY 40/43**
**Chancery Lane**
**London, WC2A 1JQ(GB)**

(54) Varnish impregnation method and apparatus.

(57) A varnish impregnation method comprises passing fibrous sheet material through a first container (2) containing a low-viscosity liquid such as a solvent, and a second container (3) containing a varnish. The sheet material is passed between the two containers through a chamber containing an inert gas which is soluble in the low viscosity liquid.

FIG. 1

EP 0 444 819 A2

The present invention relates to a varnish impregnating process and apparatus for impregnating with varnish a sheet-like base material which is made of fibre, e.g. paper or cloth, for use in fabricating a laminated board such as an electrically insulated board, a decorated board, or the like.

For effectively impregnating a sheet-like base material made of fibre with varnish, it is essential that the varnish is internally absorbed into and uniformly distributed throughout the fibre base material with eveness and also air bubbles trapped in the base material are eliminated to the greatest possible extent.

In a known varnish impregnating process, it is common to impregnate preliminarily a base material with ordinary primer varnish and feed it via a timing roll into a varnish tank for impregnation with the varnish.

The known varnish impregnating process however has drawbacks: (A) the uniform and sufficient impregnation of the base material with the varnish is not easy and takes a long time; and (B) the air bubbles trapped in the base material are not sufficiently eliminated. Those drawbacks are more evident when a varnish of higher viscosity is employed.

A further process has been proposed and is shown in Figure 3 of the drawings. Base material 11 is guided by guide rolls 17 to run through a preliminary impregnating tank 13' filled with a solvent or a diluted varnish 13'a (referred to as "preliminary impregnating liquid" hereinafter) containing a large amount of solvent, which is provided in place of the ordinary varnish for preliminary impregnation and a main impregnating tank 13 filled with an ordinary varnish 13a in this sequence.

According to this process, air trapped in the base material 11 is replaced with preliminary impregnating liquid 13'a and eliminated during the passing of the base material 11 through the preliminary impregnating liquid 13'a and thus, by feeding the base material 11 into the varnish 13a and simultaneously, evaporating the preliminary impregnating liquid 13'a absorbed in the base material 11, impregnation with the varnish 13a will be executed efficiently and air bubbles will be eliminated.

However, in the procedure shown in Figure 3, the base material 11 during transition from the preliminary impregnating liquid 13'a to the varnish 13a is exposed to the air and also, pressed by the guiding roll 17' arranged between the two tanks 13 and 13'. As a result, the removal of air from the base material 11 is obstructed and thus, the impregnation with varnish and a void-free effect will be hindered.

More particularly, while the base material 11 runs on the guide roll 17', a contact pressure is exerted onto each fibre bundle of the base material 11 which is in turn opened causing the liquid phase of the preliminary impregnating liquid 13'a, retained in the fibre strand by capillary action, to be destroyed. Then, the fibre bundles once opened are formed into bundles again as the fibre bundles are freed from the pressure by the guide roll 17' after passing the guide roll 17'. Both the destruction of the impregnating liquid phase and the restoration of the fibre bundles are executed in the air, whereby re-permeation of air through the base material 11 will be inevitable during the transition from the preliminary impregnating liquid 13'a to the varnish 13a.

The present invention is directed, in view of the foregoing problems, to a varnish impregnating method for substantial improvement in both the impregnation of a base material with varnish and the void-free effect and a varnish impregnating apparatus for intended implementation of the method.

The varnish impregnation method according to the present invention comprises, for overcoming the problems, the primary step of passing a sheet-like base material made of fibre through a low-viscosity liquid storage region for storing a low viscosity liquid such as a solvent, an intermediate sealed chamber containing a chemically inactive or inert gas such as nitrogen, and a varnish storage region for storing a varnish in this sequence, said inert gas filled region being arranged between and in communication with the low-viscosity liquid storage region and the varnish storage region and being filled with the inert gas which is soluble in the low-viscosity liquid. The method prevents the leakage of the inert gas from the inert gas filled sealed region to either the low-viscosity liquid storage region or the varnish storage region by pinching the base material at both the entrance and the exit of the inert gas filled sealed region. Preferably the amount of the low viscosity liquid contained in the base material is further controlled by pinching the base material within the gas-filled region.

The varnish impregnation apparatus according to the present invention comprises, for implementation of the foregoing method: a low-viscosity liquid storage tank for storing a low viscosity liquid such as a solvent; a varnish storage tank for storing a varnish; an inert gas filled sealed chamber having a base material entrance and a base material exit sections thereof, both opening beneath the liquid surface in their respective storage tanks, and filled in airtight state with an inactive or inert gas such as nitrogen which is soluble to the low viscosity liquid; and a guide mechanism for guiding a sheet-like base material made of fibre through the low-viscosity liquid storage tank, the inert gas filled sealed chamber, and the varnish storage tank in this sequence. The apparatus may further include pinching mechanisms provided at both the entrance and the exit sections of the inert gas filled sealed chamber for pinching the base material for preventing the leakage of the inert gas from the inert gas filled sealed chamber to the low-viscosity liquid storage tank and the varnish storage tank and a pinching mechanism provided in the inner area of the inert gas filled sealed chamber for controlling the amount of the low-viscosity liquid contained in the base material.

While the base material passes through the low-viscosity liquid storage region, the air trapped in the base material will be replaced by the low viscosity liquid and discharged.

The base material soaked with the low viscosity liquid is then transferred to the region filled with an inert gas, where it is pinched so that the low viscosity liquid contained therein is reduced to an amount required for solution of the inactive gas about fibre bundles of the base material. Subsequently, the base material carrying the small amount of the low viscosity liquid together with the inert gas which is dissolving in the low viscosity liquid is fed to the varnish storage region. In other words, the base material, which contains a small amount of the low viscosity liquid in which the inert gas is dissolved but is freed from air, is transferred to the varnish storage region while permitting no air to enter during the transition from the low-viscosity liquid storage region to the varnish storage region. Accordingly, the impregnation will be executed in an almost perfect airvoid-free manner.

As the base material is brought to the varnish storage region, its low viscosity liquid in which the inert gas is dissolved is dissipated into the varnish. Consequently, the low viscosity liquid in the base material is replaced by the varnish and thus, the base material will be impregnated with the varnish.

The amount of the low viscosity liquid dissipated into the varnish is not great and less than that of the low viscosity liquid contained in the varnish which enters the base material and is carried out from the varnish storage tank, thereby causing no dilution of the varnish.

The base material is pinched at both the entrance and the exit of the chamber, whereby the inert gas contained in the chamber will be prevented from flowing out to the low-viscosity liquid storage tank and the varnish storage tank.

The following disadvantages are almost completely eliminated that:

(A) If the inert gas flows into the low-viscosity liquid tank, the low-viscosity liquid is saturated with the inert gas. It is true that air trapped in the base material is removed in the low-viscosity liquid tank. But, the low viscosity liquid saturated with the inert gas cannot dissolve the inert gas any more when the base material is fed into the inert gas filled sealed chamber. As a result, the voids filled with the inert gas, not air, will appear.

(B) If the inactive gas flows into the varnish storage tank, it is dissolved in the low viscosity liquid which is contained in the varnish. But, a resin hardener or the like has been dissolved, in a state close to saturation, in the low viscosity liquid contained in the varnish. Hence, as a result of further dissolving of the inert gas in the low viscosity liquid, separation of the hardener occurs due to supersaturation, thus causing a failure in the curing of resin or a decrease in the bonding strength between the base material and a resin.

According to the impregnation method of the present invention provided for ensuring no generation of the aforementioned disadvantages, the impregnation with varnish can desirably be carried out, the base material can be impregnated with the varnish uniformly and sufficiently, and no existence of air voids and inert gas voids will be assured.

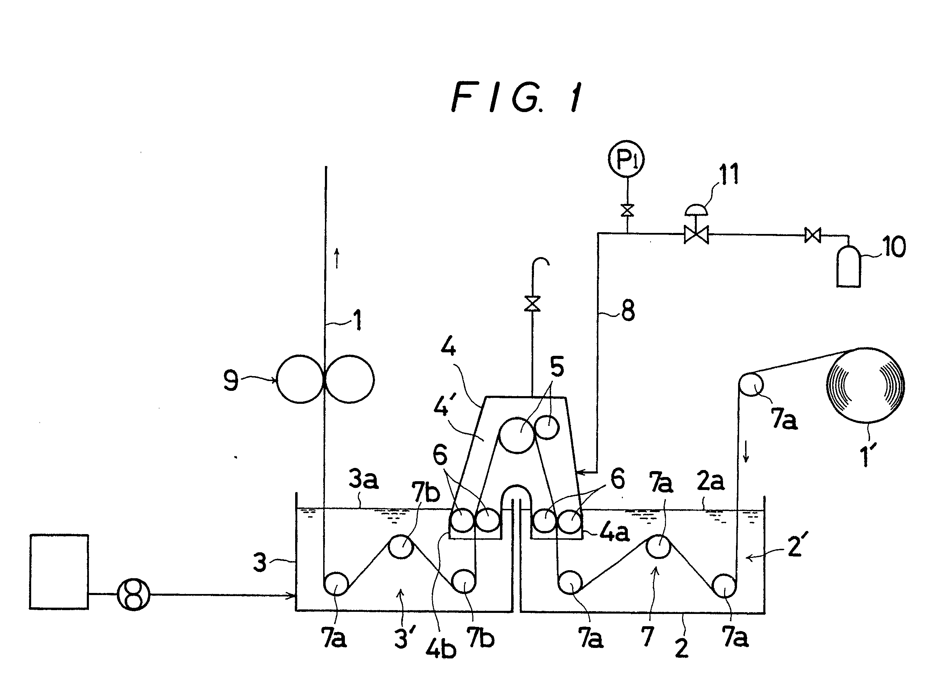

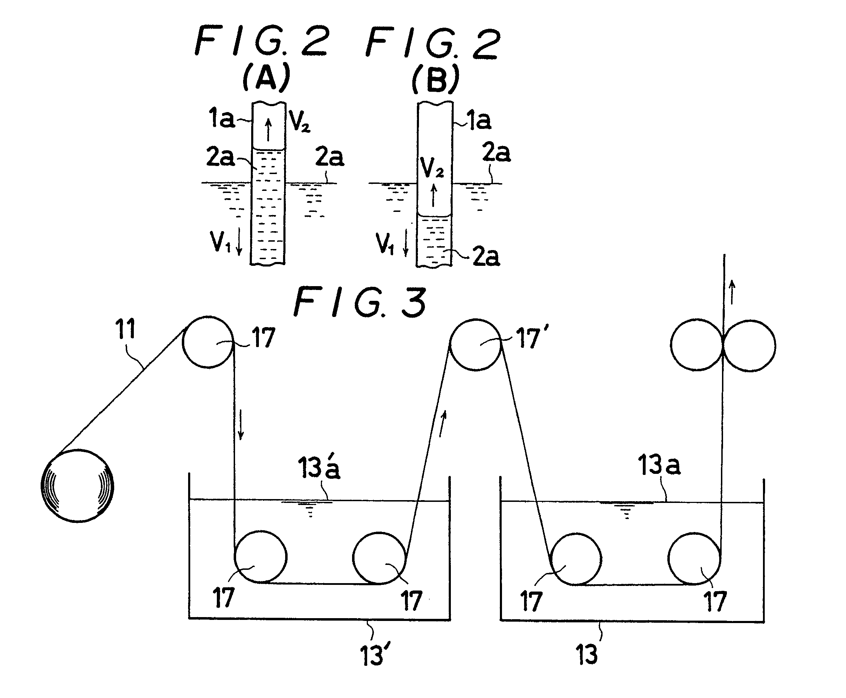

The principles of the present invention will be described in more detail referring to an embodiment shown in Figures 1 and 2 of the drawings wherein:-

Figure 1 is a cross sectional view of a varnish impregnation apparatus showing one embodiment of the present invention;

Figures 2-A and 2-B are explanatory views showing the penetration of a low viscosity liquid; and

Figure 3 (as already stated) is a cross-sectional view showing the prior art.

Figure 1 illustrates a varnish impregnation apparatus in which shown are a sheet-like base material made of fibre, a low-viscosity liquid storage tank 2 provided in an open-top arrangement and filled with a low viscosity liquid 2a such as a solvent, a varnish storage tank 3 provided in an open-top arrangement and filled with a varnish 3a, an inert gas sealed chamber 4 disposed above and between the two storage tanks 2 and 3, pressure rolls 5 installed within the chamber 4 for serving as a pinching mechanism, pinching rolls 6 disposed at both the entrance and the exit of the chamber 4, a guide mechanism 7 provided for guiding the base material 1 to travel along a given path, an inert gas supply conduit 8 coupled to the chamber 4, and a supply source 10 for supplying an inert gas which is soluble to the low viscosity liquid.

The base material 1 is selected from woven or non-woven fabrics of synthetic or natural, organic or inorganic fibre including paper, glass fibre woven fabric, glass fibre non-woven fabric, carbon fibre woven fabric, carbon fibre non-woven fabric, aramid fibre woven fabric, and aramid fibre non-woven fabric.

The low viscosity liquid 2a should have an adequate wettability to the base material 1 and namely, a solvent which has a viscosity of below 100 cP and lower than that of the varnish 3a and preferably, is equal in properties to a solvent ingredient in the varnish so that it causes no trouble when mixed with the varnish 3a. (The low viscosity liquid 2a may be maintained at a given temperature Ts by a thermal controller not shown).

The varnish 3a is commonly a thermoset resin varnish and may be a thermoplastic resin varnish, a natural resin varnish, or a no-solvent synthetic or natural liquid resin. (The varnish 3a may also be maintained at a given temperature Tw, which is lower than the temperature Ts of the low viscosity liquid, by a thermal controller not shown).

The chamber 4 has a tubular base material entrance section 4a and a tubular base material exit section 4b both extending perpendicularly from a bottom wall thereof, so that it can be formed in an inverted U-shaped tube in the form of a syphon. Both the base material entrance and exit sections 4a and 4b open under the liquid surfaces of a low-viscosity liquid storage region 2' and a varnish storage region 3' respectively, thus defining a region 4' provided in the chamber 4 and sealed airtightly by the liquid surfaces. Each of the base material entrance and exit sections 4a and 4b is provided with a pair of the pinch rolls 6 for preventing the inert gas from flowing to the low viscosity liquid 2a and the varnish 3a.

The pinch rolls 5 and 6 are rotatable in response to travelling of the base material 1 thereabout or may be self-driven for rotation in the direction of the advancement of the base material 1. In the latter case, the circumferential speed of the rolls should correspond to the travelling speed of the base material 1.

The guide mechanism 7 comprises a plurality of guide rolls 7a and 7b disposed above the low-viscosity liquid storage tank 2 and in the two storage tanks 2 and 3 so that the base material 1 can start from a base material supply source 1;, pass through the low-viscosity liquid storage region 2' to the base material entrance section 4a, further travel through the inert gas sealed region 4' while being guided by the pinch rolls 6 and the pressing rolls 5, run through the base material exit section 4b to the varnish storage tank 3, and finally, be carried through the varnish storage region 3'. In this embodiment, at least one of the guide rolls 7b disposed in the varnish storage region 3' is of the expander type so that an expanding force can be applied in the widthwise direction of the base material 1 to facilitate the varnish impregnation in the direction at a right angle to the advancement of the base material 1. Also, a varnish impregnating control mechanism 9 which comprises squeeze rolls or bars is provided above the varnish storage tank 3 for squeezing the base material 1 passing from the varnish storage tank 3, to control the impregnating amount of the varnish.

The inert gas supply conduit 8, which is communicated to the inert gas supply source 10 filled with an inert gas, for example nitrogen, which is soluble to the low viscosity liquid 2a, can feed the inert gas via a pressure control valve 11 to the region 4' where the inside air is in turn discharged and also, the inner pressure is controlled.

The impregnation method of the present invention will then be described in more detail referring to the aforementioned varnish impregnation apparatus.

The base material 1 is fed from the base material supply source 1' to the low-viscosity liquid storage tank 2 where it is immersed in the low viscosity liquid 2a and thus, the air trapped in the base material 1 is replaced with the low viscosity liquid 2a.

More particularly, when the base material 1 reaches the surface of the low viscosity liquid 2a, the low viscosity liquid 2a is penetrated into the fibre bundles 1a of the base material 1 by action of capillarity and simultaneously, the air trapped in the bundles 1a is removed by the force of the penetration. The penetrating action is however halted at a stage by the resistance to penetration attributed to the fibre strands 1a. The penetration is stopped at a level above the liquid surface (see Figure 2-A) when the running speed of the base material 1, i.e. the immersing speed $V_1$ of the fibre bundles 1a into the low viscosity liquid 2a is smaller than a velocity $V_2$ of the penetration, and beneath the liquid surface (see Figure 2-B) when $V_1 > V_2$.

Accordingly, during the passing of the base material 1, through the low-viscosity liquid region 2', all the air trapped in the strands 1a is replaced with the low viscosity liquid 2a and discharged.

The base material 1 saturated with the low viscosity liquid 2a is transferred from the base material entrance section 4a, which opens beneath the liquid level of the low-viscosity liquid storage region 2', into the inert gas filled sealed chamber 4 where it is pinched between the pinch rolls 5 and thus, a surplus of the low viscosity liquid 2a contained in the base material 1 is removed.

Also, the inert gas filled sealed chamber 4, from which the inner air has been removed by charging with the inert gas, remains filled with the inert gas and a vapour of the low viscosity liquid and contains no air at all. Hence, the base material 1 can be transferred through the interior of the inert gas filled sealed chamber 4 where a small amount of the low viscosity liquid absorbed into the base material 1 dissolves the inert gas surrounding the base material 1, is carried through the exit section 4b, opening under the liquid surface, in the absence of air and is brought to the varnish storage tank 3' where the base material 1 is impregnated with the varnish 3a in the absence of air. The inert gas surrounding the base material 1 is dissolved into the

4

low viscosity liquid carried in the base material and thus never lowers the quality of the varnish 3a. The varnish 3a is maintained at a temperature lower than that of the low viscosity liquid 2a, thereby preventing the production of the inert gas resulting from re-boiling of the inert gas in the varnish 3a. As a result, the generation of voids filled with the inert gas is prevented.

Also the amount of the low viscosity liquid brought into the varnish storage tank 3 during the above operation is less than that contained in the varnish 3a which is retained in the base material 1 and is carried out with the result that the viscosity of the varnish will never drop.

The base material 1 is widthwisely expanded by the extension force of the expander guide rolls 7b when passing the same. After the passing, however, the extension force is unloaded. Accordingly, the widthwise expansion and retraction of each fibre bundles occur in the varnish 3a. As a result, the widthwise impregnation is improved. Consequently, the fibre bundles of the base material 1 will surfficiently be impregnated with the varnish 3a.

The present inventor conducted an experimental operation of the above described apparatus using the glass fibre cloths #7628 for electric base material as the base material 1.The varnish has the composition shown in the Table given below. Methyl ethyl ketone, the solvent of the varnish 3a, was employed as the low-viscosity liquid 2a. The varnish temperature (Tw) was 15°C and the low viscosity liquid temperature (Ts) 20°C. As a result, the low viscosity liquid brought into the varnish storage tank 3 measured about 5 parts. It was confirmed that the base material was impregnated with the varnish evenly and adequately without any adverse effects such as a drop in the viscosity of the varnish in the varnish storage tank 3. Also, no air bubbles were found in the base material 1.

## Composition of Varnish

| Viscous liquid | Epoxy resin | 100 parts |
|---|---|---|
| Solvent | Methyl ethyl ketone | 25 |
| | Methylcellosolve | 20 |
| | Dimethylformamide | 15 |
| Hardening agent | Dicyandiamide | 3.5 |
| Accelerator | Imidazole | 0.1 |

As apparent from the above description, the present invention allows the base material to be impregnated with the varnish uniformly, plentifully within a short period of time and particularly, without generation of air bubble in the base material. This advantage will be emphasised in the impregnation with a high viscosity varnish.

Using the base material impregnated with varnish by the method of the present invention, finished composite products, e.g. electrically insulating boards or decorated boards, will be much improved in the quality.

According to the present invention, no timing rolls are needed and thus, the apparatus will be minimised in size and simplified in arrangement.

Also, the gas filled chamber interposed between the low viscosity liquid stage and the varnish stage is filled with an inert gas, whereby any hostile incident such as explosion of a solvent gas triggered by static electricity on the base material will be avoided.

The present invention provides such practical advantages as above described.

## Claims

1. A varnish impregnation method comprising passing fibrous sheet material through a first container containing a low-viscosity liquid such as a solvent,and a second container containing a varnish characterised by passing the sheet material between the two containers through a chamber containing an inert gas which is soluble in the low viscosity liquid.

2. A varnish impregnation method according to Claim 1, wherein the sheet is pinched during transition from the first container to the chamber and during the transition from the chamber to the second container.

3. A varnish impregnation method according to Claim 2, wherein the sheet is further pinched in the chamber containing the inert gas.

4. Apparatus for impregnating a sheet of fibrous material with varnish comprising a low-viscosity liquid storage tank for storing a low viscosity liquid such as a solvent; a varnish storage tank for storing a varnish; a chamber intermediate the tanks with an entrance and an exit for the sheet material both entrances opening beneath the liquid level in their respective storage tanks, said chamber being filled in airtight state with an inert gas which is soluble to the low viscosity liquid; a guide mechanism for guiding the sheet material successively through the solvent storage tank, the intermediate chamber and the varnish storage tank and pinching units provided at both the entrance and the exit sections of the inert gas filled chamber for pinching the base material.

5. A varnish impregnation apparatus according to Claim 4, wherein a further pinching unit is provided within the inert gas filled chamber.

# FIG. 1

EP 0 444 819 A2

# F I G. 2   F I G. 2
## (A)          (B)

# F I G. 3

EP 0 444 819 A2